**Europäisches Patentamt**

**European Patent Office**

**Office européen des brevets**

(19)

(11) Veröffentlichungsnummer : **0 366 645 B1**

(12) # EUROPÄISCHE PATENTSCHRIFT

(45) Veröffentlichungstag der Patentschrift :
**23.12.92 Patentblatt 92/52**

(51) Int. Cl.$^5$ : **G01N 27/28,** G01N 27/333, G01N 30/48

(21) Anmeldenummer : **89890264.8**

(22) Anmeldetag : **09.10.89**

(54) Messgerät zur Erfassung chemischer Parameter einer wässrigen Probe.

(30) Priorität : **27.10.88 AT 2660/88**

(43) Veröffentlichungstag der Anmeldung :
**02.05.90 Patentblatt 90/18**

(45) Bekanntmachung des Hinweises auf die
Patenterteilung :
**23.12.92 Patentblatt 92/52**

(84) Benannte Vertragsstaaten :
**DE FR GB**

(56) Entgegenhaltungen :
**EP-A- 0 042 157**
**EP-A- 0 129 233**
**EP-A- 0 307 583**
**WO-A-85/04719**
**WO-A-89/12226**
**AT-B- 376 117**

(73) Patentinhaber : **AVL Medical Instruments AG**
**Stettemerstrasse 28**
**CH-8207 Schaffhausen (CH)**

(72) Erfinder : **Marsoner, Hermann, Dipl.-Ing.Dr.**
**Roseggersiedlung 2**
**A-8153 Steinberg (AT)**
Erfinder : **Kleinhappl, Erich, Ing.**
**Schöckelblickstrasse 26**
**A-8044 Graz (AT)**
Erfinder : **Ritter, Christoph, Dr.**
**Radegunderstrasse 30**
**A-8045 Graz (AT)**

(74) Vertreter : **Krause, Walter, Dr. Dipl.-Ing. et al**
**Postfach 200 Singerstrasse 8**
**A-1014 Wien (AT)**

**Beschreibung**

Die Erfindung betrifft ein Meßgerät zur Erfassung chemischer Parameter einer wäßrigen Probe mit zumindest einer zwischen der Probe und einem elektrolytischen Medium angeordneten symmetrischen, ionensensitiven Membran, wobei die Probe und das elektrolytische Medium gleichartig aufgebaute, an eine Auswerteeinheit angeschlossene Referenzelektroden kontaktieren.

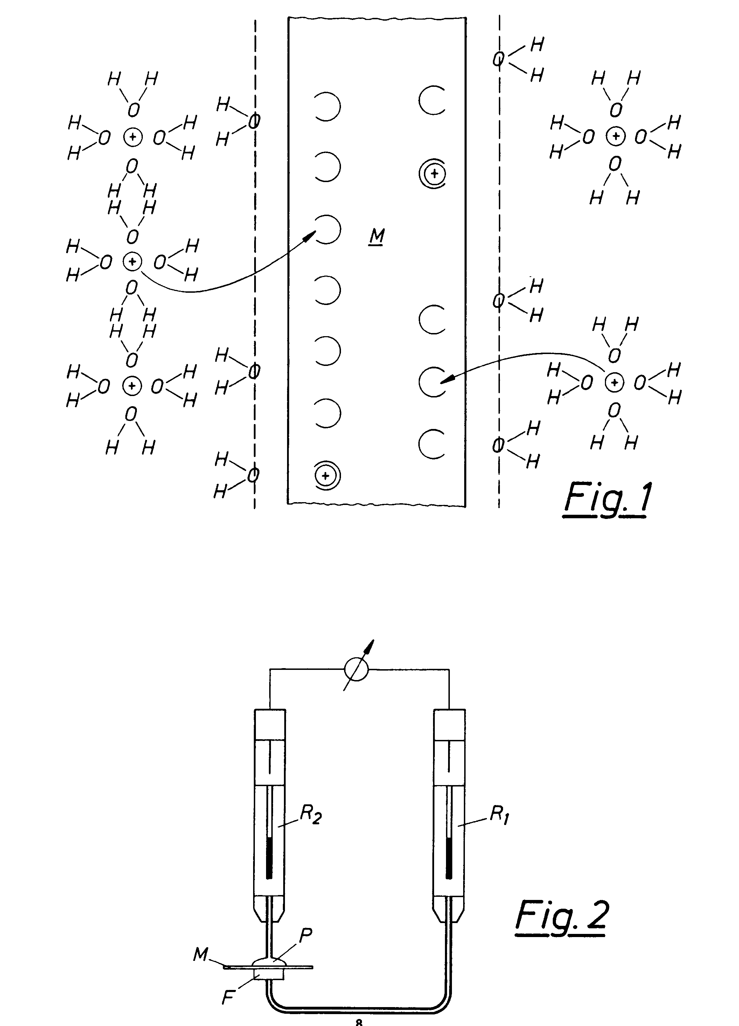

Die Wirkungsweise herkömmlicher ionensensitiver Membranen ist vereinfacht in Fig. 1 dargestellt. Die ionensensitive Membran M enthält eine Anzahl von Ligandmolekülen, die als kleine geöffnete Kreise dargestellt sind. Diese Darstellung bezieht sich auf die Tatsache, daß diese Ligandmoleküle in der Lage sind, ein Ion, welches als kleiner Kreis mit einem +- Zeichen dargestellt ist, zu binden, bzw. wie schematisch gezeichnet zangenartig zu umschließen. Je besser und genauer das Ligandmolekül das Ion umschließt um so spezifischer und selektiver ist die Membran für dieses betreffende Ion. Derartige Ligandmoleküle sitzen insbesondere auch an der Grenze zwischen der Membran und der Elektrolytlösung. Die Ionen, also die zu messenden Teilchen, sind in der Elektrolytlösung von Wassermolekülen umgeben und sitzen in Positionen, die von der Membran in der Regel einige Ionendurchmesser weit entfernt sind. Von dieser Position aus können einzelne Ionen durch ihre thermische Eigenenergie so große Bewegungsfähigkeit aufbringen, daß sie ihre umgebende Wasserhülle verlassen und eine sehr kleine Wegstrecke in die Membran eindringen und dort ein geeignetes Ligandmolekül vorfinden. Wenn das Ion zu einem Ligandmolekül vorgedrungen ist, nimmt es in diesem eine genau festgelegte Position ein, ist dadurch in der Membran stabilisiert und wird durch das Ligandmolekül unter Umständen in der Membran weitertransportiert.

In der Regel sind bei ionensensitiven Sensoren beide Seiten der Membran mit einer Flüssigkeit in Kontakt. Die der Innen seite herkömmlicher Elektroden zugewandten Membranseite ist mit der Innenlösung in Kontakt und die Außenseite mit der Probe. An beiden Seiten der Membran entstehen also derartige Ionenaustauschvorgänge und führen dazu, daß auf beiden Seiten der Membran die elektrischen Ladungen der Ionen stabil festgehalten werden. Dadurch entsteht zwischen den beiden Membranseiten eine elektrische Potentialdifferenz, die mit bekannten Mitteln gemessen werden kann.

Herkömmliche Membranen weisen nun bereits herstellungsbedingt auf beiden Seiten unterschiedliche Eigenschaften im Bezug auf die Belegungsdichte und Positionierung der Ligandmoleküle und deren Beweglichkeit in der Membran auf. Dadurch entsteht bei diesen Membranen auch dann eine elektrische Potentialdifferenz zwischen den beiden Membranseiten, wenn diese mit dem gleichen elektrolytischen Medium in Kontakt sind. Diesen Umstand nennt man Asymmetrie der Membran. Ideal wären jedoch Membranen zwischen deren beiden Membranseiten keine Potentialdifferenz besteht, wenn sie mit derselben Elektrolytlösung in Kontakt sind, sogenannte symmetrische Membranen.

Aus der EP-A-0 129 233 ist eine $K^+$- ionenselektive, symmetrische Membran bzw. ein Verfahren zu ihrer Herstellung bekanntgeworden. Ein wesentlicher Vorteil dieser symmetrischen Membranen besteht darin, daß diese nicht mehr geeicht werden müssen, da zwischen ihren beiden Seiten keine elektrische Potentialdifferenz entsteht, wenn Flüssigkeiten gleicher Ionenkonzentration bzw. Ionenaktivität angrenzen. Wenn man also beispielsweise auf der einen Seite eine Standardlösung an die Membran angrenzen läßt und auf der anderen Seite eine Probe und man mißt die elektrische Potentialdifferenz zwischen den beiden Membranseiten bzw. den beiden Flüssigkeiten mit völlig identischen Referenzelektroden und stellt dabei fest, daß die Potentialdifferenz 0 ist, so hat die Probe den genau gleichen Ionenwert wie die auf der anderen Seite der Membran liegende Standardlösung. Da die Änderung des elektrischen Potentials eine sehr genaue Funktion der Ionenkonzentration ist, kann jede beliebige gemessene Potentialdifferenz zwischen den beiden Membranseiten in eine Konzentrationsdifferenz der Ionen in den Flüssigkeiten umgerechnet werden. Die Voraussetzung ist allerdings, daß die beiden verwendeten Referenzelektroden völlig identisch sind und zueinander keine elektrische Spannungsdifferenz aufweisen.

Ein bekanntes Meßgerät entsprechend der WO P9/12226, Prioritätstag 07.06.88, Veröffentlichungstag 14.12.89, unter Verwendung derartiger symmetrischer ionensensitiver Membranen geht aus Fig. 2 hervor. Man benötigt zwei Referenzelektroden $R_1$, $R_2$ die so gebaut sind, daß mit ihnen die beiden unterschiedlichen Seiten der Membran M abgetastet werden können. Diese beiden Referenzelektroden können zunächst gegeneinander vermessen werden, um eine allfällige Potentialdifferenz zu bestimmen. Dann bringt man die symmetrische Membran M über einen Brückenelektrolyten in Kontakt mit der einen der beiden Referenzelektroden $R_1$, wobei zur Vergrößerung der wirksamen Membranfläche eine saugfähige Unterlage, z. B. ein Filterpapier F verwendet wird, und plaziert die Probe P auf der anderen Seite der Membran, die sodann mit der zweiten Referenzelektrode $R_2$ in Kontakt gebracht wird. Auf diese Art und Weise wird eine Potentialdifferenz zwischen den beiden Membranseiten gemessen, die ein Maß für die Ionenkonzentration der Probe ist. Dabei kann jeweils nur die Konzentration einer ganz bestimmten Ionensorte, für die die Membran M selektiv ist gemessen werden. Nachteiliger Weise ist das bekannte Meßgerät für Serienmessungen in Labors schlecht geeignet und eine Kontamination des Meßgerätes durch die Probe nicht zu vermeiden.

Aufgabe der vorliegenden Erfindung ist es, unter Ausnützung der vorteilhaften Eigenschaften symmetrischer, ionenselektiver Membranen, ein praktisches, benutzerfreundliches Meßgerät vorzuschlagen, wobei eine Kontamination des Meßgerätes bzw. des Bedienungspersonals weitgehend ausgeschlossen werden soll.

Diese Aufgabe wird erfindungsgemäß dadurch gelöst, daß ein in das Meßgerät einsteckbares Meßelement vorgesehen ist, welches einen Probenraum aufweist, der über eine Bohrung mit einer Referenzkammer verbunden ist, daß zumindest eine durch eine symmetrische ionensensitive Membran vom Probenraum getrennte Meßkammer vorgesehen ist, wobei die Referenzkammer und die Meßkammer elektrolytische Medien aufnehmen, in welche die im Meßgerät angeordneten Referenzelektroden eintauchen. Das Meßelement des erfindungsgemäßen Meßgerätes, welches mehrere Meßkammern zur gleichzeitigen Erfassung unterschiedlicher Ionen aufweisen kann, wird einfach in eine Eingabeöffnung des Meßgerätes gesteckt, wonach die gleichartig aufgebauten Referenzelektroden in die mit einem elektrolytischen Medium gefüllten Referenz- und Meßkammern tauchen und über die an den Referenzelektroden anliegende Spannungsdifferenz die jeweilige Ionenkonzentration bestimmt wird. Aufgrund des einfachen Aufbaus des Meßelementes kann dieses billig in großer Stückzahl hergestellt werden und eignet sich auch als Einweg-Meßelement, welches nach der Verwendung samt Inhalt weggeworfen wird. Das Andocken der Referenzelektroden im Meßgerät erfolgt entweder durch den Einsteckvorgang selbst, oder durch eine nach dem Einbringen des Meßelementes ablaufende Relativbewegung zwischen Meßelement und Elektroden. Da die Elektroden die Probe nicht direkt berühren, sondern nur in das elektrolytische Medium in den einzelnen Kammern eintauchen, ist eine Kontamination von Innenteilen des Meßgerätes ausgeschlossen und ein Reinigen des Gerätes zwischen einzelnen Meßvorgängen nicht notwendig.

Obwohl es durchaus möglich ist, daß alle Meß- und Referenzkammern mit demselben elektrolytischen Medium ausgestattet sind, ist es in einer Weiterbildung der Erfindung vorgesehen, daß die Meßkammern ein Standardmedium enthalten und die Referenzkammer einen Referenzelektrolyten, vorzugsweise KCl, enthält. Das Standardmedium, vorzugsweise eine wäßrige Standardlösung, kann die zu messenden Ionen jeweils in der für die Probe zu erwartenden Konzentration enthalten, wodurch äußerst genaue Messungen erzielbar sind. Als Referenzelektrolyt kann vorteilhafter Weise der Elektrodenelektrolyt verwendet werden.

Eine Weiterbildung des erfindungsgemäßen Meßgerätes sieht vor, daß jede in eine der Meßkammern eintauchende Referenzelektrode mit einem Vorratsbehälter für das Standardmedium, sowie die in die Referenzkammer eintauchende Referenzelektrode mit einem Vorratsbehälter für den Referenzelektrolyten verbunden ist, sowie daß die Referenzelektroden mit Zufuhrleitungen zum Einbringen des Referenzelektrolyten bzw. des Standardmediums in die Referenz- bzw. Meßkammern ausgestattet sind. In dieser Ausführungsvarianten wird kurz vor der Messung in die Meßkammern des Meßelementes jeweils ein Tropfen einer Standardlösung sowie in die Referenzkammer ein Tropfen Referenzelektrolyt gefüllt, in welche dann die Referenzelektroden zur Messung eintauchen. Bei Verwendung von Referenzelektroden mit Meßkapillaren kann durch diese das jeweilige elektrolytische Medium in die Referenz- und Meßkammern eingebracht werden. Es ist jedoch auch möglich, Festkörperelektroden, beispielsweise Metall/Metallchlorid-Elektroden, zu verwenden, welche röhrchenförmig ausgebildet sind und zur Einbringung des Standardmediums bzw. des Referenzelektrolyten geeignet sind.

Eine entsprechende Vereinfachung des erfindungsgemäßen Meßgerätes kann dadurch erreicht werden, daß das Meßelement in den Referenz- und Meßkammern ein elektrolythaltiges Gel aufweist, in welches im Meßgerät angeordnete Festkörper-Referenzelektroden, vorzugsweise Metall/Metallchlorid-Elektroden eintauchen, wobei die Referenz- und Meßkammern mit von den Festkörper-Referenzelektroden durchstechbaren Folien abgedeckt sind. Bei dieser Ausführungsvariante sind weder Vorratsbehälter noch Pumpvorrichtungen für die elektrolytischen Medien notwendig, da sich das elektrolythaltige Gel bereits im meßfertigen, vorzugsweise einzeln verpackten Meßelement befindet. Nachdem die Probe in den Probenraum eingebracht ist, wird das Meßelement in das Meßgerät eingeführt, die Abdeckfolien von den Festkörperelektroden durchstochen und die Messung durchgeführt.

Für das Meßelement sind nun verschiedene Ausführungsvarianten denkbar. So ist in einer ersten Variante vorgesehen, daß das Meßelement einen als Kapillare ausgebildeten Probenraum aufweist, welcher mit den in Reihe angeordneten Referenz- und Meßkammern in Verbindung steht, wobei an einem Ende der Kapillare eine Aufnahmekammer und am anderen Ende eine Austrittskammer für die Probe angeordnet ist. Die in die Aufnahmekammer eingebrachte Probe fließt aufgrund der Kapillarwirkung unterhalb der Referenz- und Meßkammern vorbei und kann in der Austrittskammer wieder austreten. Dabei kontaktiert die Probe eine Reihe ionensensitiver symmetrischer Membranen, welche den Boden der einzelnen Meßkammern bilden.

Eine bessere Handhabung des Meßgerätes wird erfindungsgemäß dadurch erreicht, daß das Meßelement einen Griffteil, sowie einen die einzelnen Kammern abschließenden Deckel aufweist. Das Meßelement wird im geöffneten Zustand in das Gerät eingeschoben und nach der Meßung durch die Auswurfbewegung des Gerätes bzw. durch den Entnahmevorgang automatisch verschlossen und kann so problemlos entsorgt werden.

In einer weiteren erfindungsgemäßen Ausführungsvariante ist vorgesehen, daß das Meßelement als Einweg-Kolbenspritze ausgebildet ist, deren Kolbenraum als Probenraum fungiert, sowie daß die Referenz- und Meßkammern in der Kolbenwand integriert sind und mit dem Kolbenraum in Verbindung stehen. In dieser Ausführungsvariante ist das Probenentnahmegerät, beispielsweise zur Entnahme einer Blutprobe, mit dem eigentlichen Meßelement identisch und kann sofort nach Abnahme der Nadel in das Meßgerät eingeschoben werden.

Vorteilhafter Weise weist dabei die Kolbenspritze eine Verriegelungsvorrichtung auf, welche nach der Probenaufnahme eine Vorwärtsbewegung des Kolbens der Kolbenspritze unterbindet, wodurch ein Austreten von Probenflüssigkeit verhindert wird.

Schließlich ist erfindungsgemäß vorgesehen, daß je eine Meßkammer zur Bestimmung der Na-, K- und Li-Konzentration vorgesehen ist.

Die Erfindung wird im folgenden anhand von Zeichnungen näher erläutert. Es zeigen:

Fig. 1 eine herkömmliche asymmetrische Membran,

Fig. 2 ein Meßgerät nach dem Stand der Technik, beide bereits eingangs beschrieben,

Fig. 3 ein Meßgerät nach der Erfindung,

Fig. 4a bis c ein Meßelement für das Meßgerät nach Fig. 3 in verschiedenen Schnittdarstellungen,

Fig. 5 ein weiteres Meßgerät, sowie

Fig. 6 ein Meßelement für das Meßgerät nach Fig. 5.

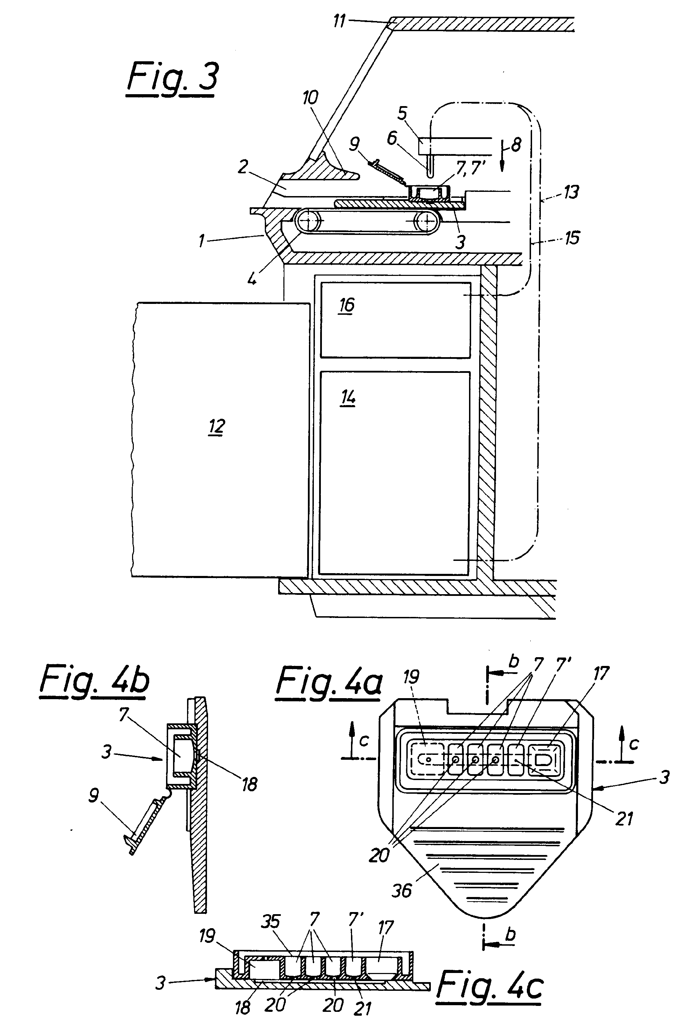

Fig. 3 zeigt ein erfindungsgemäßes Meßgerät 1 mit einer Eingabeöffnung 2 für ein Meßelement 3, welches nach seiner Eingabe von einem Transportmechanismus 4 erfaßt und in eine Meßposition befördert wird. In dieser Meßposition tauchen an einer Halterung 5 angeordnete feste Referenzelektroden 6 in die mit einem Standardmedium gefüllten Meßkammern 7 bzw. die mit einem Referenzelektrolyten gefüllte Referenzkammer 7′, wobei die Halterung 5 mit den Referenzelektroden 6 eine Hubbewegung entlang Pfeil 8 ausführt. Nach Abschluß der Messung wird das Meßelement 3 mit Hilfe des Transportmechanismus 4 aus dem Meßgerät 1 befördert, wobei eine mit dem Deckel 9 des Meßelementes 3 in Kontakt kommende Nase 10 des Gehäuses 11 des Meßgerätes für das Schließen des Deckels 9 sorgt. Das ausgeworfene Meßelement 3 fällt anschließend in den Abfallbehälter 12. Die in Reihe angeordneten Referenzelektroden 6 welche in die Meßkammern 7 eintauchen und von welchen hier nur die erste sichtbar ist, sind über Leitungen 13 mit einem Vorratsbehälter 14 für das Standardmedium verbunden. Gleiches gilt für die in die Referenzkammer 7′ eintauchende Referenzelektrode 6, welche mit der Leitung 15 an einen Vorratsbehälter 16 für den Referenzelektrolyten angeschlossen ist. Die Signalerfassung und Auswertung bzw. die an sich bekannten dafür notwendigen Einrichtungen sind hier nicht näher dargestellt.

In Fig. 4 ist das Meßelement 3 aus Fig. 1 im Detail dargestellt und zwar in Fig. 4a in Draufsicht ohne Deckel 9, in Fig. 4b geschnitten nach der Linie b-b mit aufgeklapptem Dekkel 9, sowie in Fig. 4c geschnitten nach der Linie c-c. Die Probe wird in dieses Meßelement in die Aufnahmekammer 17 in Form von einigen Tropfen eingegeben und fließt sodann in einer Kapillare 18 bzw. einem kapillarförmigen Spalt, welcher hier den Probenraum bildet, durch Kapillarwirkung unterhalb der Meßkammern 7 sowie der Referenzkammer 7′ vorbei und kann bei der Austrittskammer 19 wieder austreten. Dabei kontaktiert die Probe von unten eine Reihe von symmetrischen ionensensitiven Membranen 20 (in diesem Beispiel für Na, K und Li), welche in den Boden der Kammern 7 so eingeschweißt sind, daß sie nach oben die Kapillare 18 verschließen. Die Referenzkammer 7′ weist eine kleine Öffnung 21 auf, mit der die Probe mit der Referenzelektrode in Kontakt gebracht werden kann. Die Messung erfolgt nun so, daß die Referenzkammer 7′ mit einem Tropfen Referenzelektrolyt gefüllt wird und die Meßkammern 7 mit den ionensensitiven Membranen 20 mit einem Tropfen der Standardlösung, sowie daß die Referenzelektroden 6 (wie in Fig. 1 dargestellt) in die einzelnen Kammern 7, 7′ eintauchen und den elektrischen Kontakt bilden. Es können natürlich auch hier die einzelnen Kammern 7, 7′ mit einem elektrolythaltigen Gel gefüllt und mit einer Folie 35 abgedeckt sein, sodaß nur noch feste spitzenförmige Referenzelektroden in diese Kammern eintauchen müssen. Das Meßelement 3 ist nach der Messung mit einem Deckel 9 verschließbar und kann entsorgt werden, ohne daß Probereste oder sonstige Flüssigkeiten ausfließen. Zur besseren Handhabung ist das Meßelement 3 mit einem Griffteil 36 ausgestattet.

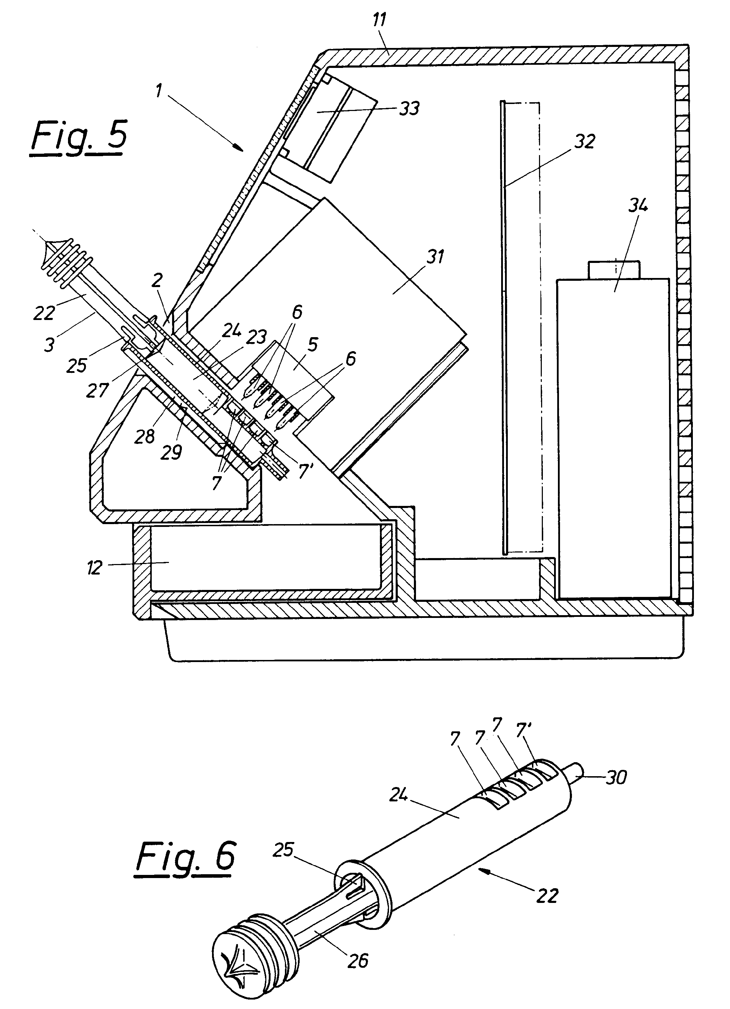

Bei allen weiteren Ausführungsvarianten sind gleiche Teile mit gleichen Bezugszeichen versehen. So ist in Fig. 5 ein Meßgerät 1 dargestellt, welches ein Meßelement 3 in Form einer Einweg-Kolbenspritze 22 aufnimmt, deren Kolbenraum 23 als Probenraum fungiert. Die Referenz- und Meßkammern 7, 7′ sind hier in der Wand 24 der Kolbenspritze 22 integriert und stehen über die Membranen 20 bzw. über die Öffung 21 der Referenzkammer 7′ mit dem Kolbenraum 23 in Verbindung. Die Kolbenspritze 22 weist, wie auch im Detail in Fig. 6 ersichtlich, eine Verriegelungsvorrichtung 25 am Schaft 26 des Kolbens 27 auf, welche nach einmaliger Entnahme einer Probe verriegelt wird und eine Vorwärtsbewegung des Kolbens 27 ausschließt. An der Wand 24 der Spritze 22 ist eine vorspringende Leiste 28 angeformt, welche in einer Nut 29 der Eingabeöffnung 2 geführt wird, sodaß das richtige Einführen der Einweg-Kolbenspritze erleichtert wird. Aus dem Nadel-Ansteckteil 30 der Kolbenspritze 22 während der Messung austretende geringe Probenmengen, werden von einem herausnehmbaren Abfallbehälter 12 aufgenommen.

Der mit 31 bezeichnete Signalableitmechanismus samt Vorverstärker schließt direkt an die Halterung 5 der Referenzelektroden 6 an. Das von der Auswerteeinheit 32 errechnete Meßergebnis der einzelnen Ionenkonzentrationen gelangt über ein Display 33 zur Anzeige; die einzelnen elektrischen Komponenten werden über eine Stromquelle 34 gespeist. Von großem Vorteil sind die kompakte Ausführung und die kleinen Abmessungen der dargelegten Ausführungsvarianten.

**Patentansprüche**

1. Meßgerät zur Erfassung chemischer Parameter einer wäßrigen Probe mit zwei gleichartig aufgebauten, im Meßgerät angeordneten Referenzelektroden (6), die an eine Auswerteeinheit angeschlossen sind, sowie mit einem in das Meßgerät (1) einsteckbaren Meßelement (3), welches einen Probenraum (18;23) aufweist, der über eine Bohrung (21) mit einer Referenzkammer (7′) verbunden ist und wobei zumindest eine durch eine symmetrische ionensensitive Membran (20) vom Probenraum (18; 23) getrennte Meßkammer (7) vorgesehen ist, wobei die Referenzkammer (7′) und die Meßkammer (7) elektrolytische Medien aufnehmen, in welche die Referenzelektroden (6) eintauchen.

2. Meßgerät nach Anspruch 1, **dadurch gekennzeichnet**, daß die Meßkammern (7) ein Standardmedium enthalten und die Referenzkammer (7′) einen Referenzelektrolyten, vorzugsweise KCl, enthält.

3. Meßgerät nach Anspruch 2, **dadurch gekennzeichnet**, daß jede in eine der Meßkammern (7′) eintauchende Referenzelektrode (6) mit einem Vorratsbehälter (14) für das Standardmedium, sowie die in die Referenzkammer (7′) eintauchende Referenzelektrode (6) mit einem Vorratsbehälter (16) für den Referenzelektrolyten verbunden ist, sowie daß die Referenzelektroden (6) mit Zufuhrleitungen (13, 15) zum Einbringen des Referenzelektrolyten bzw. des Standardmediums in die Referenz- bzw. Meßkammern (7, 7′) ausgestattet sind.

4. Meßgerät nach Ansprüche 1 oder 2, **dadurch gekennzeichnet**, daß das Meßelement (3) in den Referenz- und Meßkammern (7, 7′) ein elektrolythaltiges Gel aufweist, in welches im Meßgerät (1) angeordnete Festkörper-Referenzelektroden (6), vorzugsweise Metall/Metallchlorid-Elektroden eintauchen.

5. Meßgerät nach Anspruch 4, **dadurch gekennzeichnet**, daß die Referenz- und Meßkammern (7, 7′) mit von den Festkörper-Referenzelektroden (6) durchstechbaren Folien (35) abgedeckt sind.

6. Meßgerät nach einem der Ansprüche 1 bis 5, **dadurch gekennzeichnet**, daß das Meßelement (3) einen als Kapillare (18) ausgebildeten Probenraum aufweist, welcher mit den in Reihe angeordneten Referenz- und Meßkammern (7, 7′) in Verbindung steht, wobei an einem Ende der Kapillare (18) eine Aufnahmekammer (17) und am anderen Ende eine Austrittskammer (19) für die Probe angeordnet ist.

7. Meßgerät nach Anspruch 6, **dadurch gekennzeichnet**, daß das Meßelement (3) einen Griffteil (36), sowie einen die einzelnen Kammern (7, 7′) abschließenden Deckel (9) aufweist.

8. Meßgerät nach einem der Ansprüche 1 bis 5, **dadurch gekennzeichnet**, daß das Meßelement(3) als Einweg-Kolbenspritze (22) ausgebildet ist, deren Kolbenraum (23) als Probenraum fungiert, sowie daß die Referenz- und Meßkammern (7, 7′) in der Kolbenwand (24) integriert sind und mit dem Kolbenraum (23) in Verbindung stehen.

9. Meßgerät nach Anspruch 8, **dadurch gekennzeichnet**, daß die Kolbenspritze (22) eine Verriegelungsvorrichtung (25) aufweist, welche nach der Probenaufnahme eine Vorwärtsbewegung des Kolbens (27) der Kolbenspritze (22) unterbindet.

10. Meßgerät nach einem der Ansprüche 1 bis 9, **dadurch gekennzeichnet**, daß je eine Meßkammer (7) zur Bestimmung der Na-, K- und Li-Konzentration vorgesehen ist.

**Claims**

1. A measuring device for determining chemical parameters of an aqueous sample, with two identically configured reference electrodes (6) located in the measuring device (1), which are connected to an evaluation unit, and with a measuring element (3), which can be inserted into the measuring device (1), and which has a sample chamber (18;23) connected to a reference chamber (7') by means of a bore (21), and wherein is provided at least one measuring chamber (7), which is separated from the sample chamber (18;23) by a symmetrical, ion-sensitive membrane (20), both the reference chamber (7') and the measuring chamber (7) containing electrolytic media in which are immersed the reference electrodes (6).

2. A measuring device according to claim 1, wherein the measuring chambers (7) contain a standard medium and the reference chamber (7') contains a reference elctrolyte, preferably KCl.

3. A measuring device according to claim 2, wherein each reference electrode (6) dipping into one of the measuring chambers (7) is connected with a reservoir (14) containing the standard medium, and wherein the reference electrode (6) dipping into the reference chamber (7') is connected with a reservoir (16) containing the reference elelctrolyte, and wherein the reference electrodes (6) have feed lines (13, 15) for entering the reference electrolyte or the standard medium into the reference or measuring chambers (7, 7').

4. A measuring device according to claim 1 or 2, wherein the reference and measuring chambers (7, 7') of the measuring element (3) are filled with a gel containing an electrolyte, into which are dipped solid state reference electrodes (6) located in the measuring device (1), i.e. preferably metal/metal-chloride electrodes.

5. A measuring device according to claim 4, wherein the reference and measuring chambers (7, 7') are covered by thin sheets (35) that can be pierced by the solid state reference electrodes (6).

6. A measuring device according to any of claims 1 to 5, wherein the measuring element (3) has a sample chamber configured as a capillary tube (18), which is connected to the reference and measuring chambers (7, 7') located one behind the other, an inlet chamber (17) for the sample being provided on one end of the capillary (18) and an outlet chamber (19) on the other.

7. A measuring device according to claim 6, wherein the measuring element (3) is provided with a handle (36) and a cover (9) for the individual chambers (7, 7').

8. A measuring device according to any of claims 1 to 5, wherein the measuring element (3) is configured as a one-way syringe (22), whose plunger chamber (23) is used as a sample chamber, and wherein the reference and measuring chambers (7, 7') are integrated into the plunger wall (24) and are connected to the plunger chamber (23).

9. A measuring device according to claim 8, wherein the syringe (22) is provided with a locking element (25), which will prevent a forward motion of the plunger (27) of the syringe (22) after sample-taking.

10. A measuring device according to any of claims 1 to 9, wherein is provided one measuring chamber each for determining Na, K and Li concentrations.

**Revendications**

1. Appareil de mesure pour détecter des paramètres chimiques dans un échantillon aqueux, avec deux électrodes de référence (6) de construction identique disposées dans l'appareil de mesure et qui sont raccordées à une unité d'exploitation, ainsi qu'avec un élément de mesure (3) susceptible d'être enfiché sur l'appareil de mesure (20) et qui comporte un compartiment d'échantillon (18 ; 23) qui est en communication par l'intermédiaire d'un perçage (21) avec une chambre de référence (7'), tandis qu'il est prévu au moins une chambre de mesure (7) séparée du compartiment d'échantillon (18 ; 23), et la chambre de référence (7') et la chambre de mesure (7) reçoivent des milieux électrolytiques dans lesquels plongent les électrodes de référence (6).

2. Appareil de mesure selon la revendication 1, caractérisé en ce que les chambres de mesure (7) contiennent un milieu standard tandis que les chambres de référence (7') contiennent un électrolyte de référence, de préférence KCl.

3. Appareil de mesure selon la revendication 2, caractérisé en ce que chaque électrode de référence (6) plongeant dans l'une des chambres de mesure (7) est en communication avec un réservoir (16) pour le milieu standard, tandis que l'électrode de référence (6) plongeant dans la chambre de référence (7') est reliée à un réservoir (16) pour l'électrolyte de référence, et en ce que les électrodes de référence (6) sont équipées de canalisation d'alimentation (13, 15) pour introduire l'électrolyte de référence ou bien le milieu standard dans les chambres de référence ou les chambres de mesure (7, 7').

4. Appareil de mesure selon la revendication 1 ou la revendication 2, caractérisé en ce que l'élément de mesure (3) dans les chambres de référence et de mesure (7, 7') comporte un gel contenant de l'électrolyte, dans lequel plongent des électrodes solides de référence (6), de préférence des électrodes métal/chlorure métallique, disposées dans l'appareil de mesure (1).

5. Appareil de mesure selon la revendication 4, caractérisé en ce que les chambres de référence et de mesure (7, 7') sont recouvertes par des films (35) susceptibles d'être percés par les électrodes de référence (6) solides.

6. Appareil de mesure selon l'une des revendications 1 à 5, caractérisé en ce que l'élément de mesure (3) comporte un compartiment d'échantillon réalisé sous forme de capillaire (18), qui est en communication avec les chambres de référence et de mesure (7, 7') disposées en série, tandis qu'à une extrémité du capillaire (18) est disposée une chambre réceptrice (17) et à l'autre extrémité une chambre de sortie (19) pour l'échantillon.

7. Appareil de mesure selon la revendication 6, caractérisé en ce que l'élément de mesure (3) comporte une partie de préhension (36) ainsi qu'un couvercle (9) fermant les différentes chambres (7, 7').

8. Appareil de mesure selon l'une des revendications 1 à 5, caractérisé en ce que l'élément de mesure (3) est réalisé sous la forme d'une seringue à piston (22) jetable, dont la chambre de piston (23) assume la fonction de compartiment d'échantillon, et en ce que les chambres de référence et de mesure (7, 7') sont intégrées dans la paroi (24) du piston et sont en communication avec la chambre du piston (23).

9. Appareil de mesure selon la revendication 8, caractérisé en ce que la seringue (22) comporte un dispositif de verrouillage (25) qui, après la prise d'échantillon, interdit un déplacement en avant du piston (27) de la seringue (22).

10. Appareil de mesure selon l'une des revendications 1 à 9, caractérisé en ce qu'une chambre de mesure (7) est respectivement prévue pour la détermination de la concentration de Na-, K- et Li.

_Fig.1_

_Fig.2_

8

EP 0 366 645 B1

_Fig. 3_

_Fig. 4b_

_Fig. 4a_

_Fig. 4c_

9

## _Fig. 5_

## _Fig. 6_